Europäisches Patentamt

(19) European Patent Office    (11) Publication number:    **0 029 813**

Office européen des brevets    **A1**

(12)    # EUROPEAN PATENT APPLICATION

(21) Application number: **80830097.4**    (51) Int. Cl.³: **B 60 R 1/06**

(22) Date of filing: **18.11.80**

(30) Priority: **26.11.79 IT 5375779 U**

(43) Date of publication of application:
**03.06.81 Bulletin 81/22**

(84) Designated Contracting States:
**DE FR GB NL**

(71) Applicant: **VITALONI S.p.A.**
**Viale Risorgimento, 28**
**I-10092 Beinasco (Torino)(IT)**

(72) Inventor: **Vitaloni, Massimo**
**Via Moncenisio 8**
**Rivalta (Torino)(IT)**

(74) Representative: **Saconney, Piero et al,**
**c/o JACOBACCI-CASETTA & PERANI S.n.c. Via Alfieri, 17**
**I-10121 Torino(IT)**

(54) External rear-view mirror assembly for trailer-towing motor vehicles.

㉗ An external rear-view mirror assembly comprises a pair of caliper-like clamping arms (10, 12) articulated to each other and a mirror-mounting stem (50) which projects from the articulation joint of the arms. The two arms (10, 12) are retained in an articulated condition by releasable retention means (102, 98). Each arm (10, 12) has a respective radial wall (78, 80) at its end (74, 76) which articulates with the other arm. At least one of the walls has a circular array of notches (114, 116) concentric with the articulation axis (X-X) and the other wall has at least one corresponding notch. The arms (10, 12) are biassed towards each other by a helical torsion spring (108) which is coaxial with the articulation axis (X-X), and is interposed between the radial walls (78, 80) in such a way that a respective outwardly facing axially projecting end (110, 112) of the spring engages a notch of the adjacent radial wall (78, 80). Release of the retention means (98, 102) enables the disengagement of the projecting ends (110, 112) of the spring (108) from the notches (114, 116) and their subsequent engagement in other notches to vary the angle between the arms (10, 12) corresponding to the relaxation condition of the spring (108).

EP 0 029 813 A1

FIG. 3

FIG. 5

- 1 -

"External rear-view mirror assembly for trailer-towing motor vehicles"

The present invention relates to an external rear-view mirror assembly for trailer-towing motor vehicles, of the type comprising a pair of caliper-like arms articulated to each other about an axis which is substantially parallel to the direction of travel of the vehicle when the arms are fitted thereto, respective jaws which are carried at the ends of the arms remote from the articulation joint and are engageable with the body of the vehicle in correspondence with a side edge of the bonnet aperture and an edge of an underlying mudguard, the arms being biassed towards each other by a spring which clamps the jaws, and a mirror-mounting stem which projects from the articulation joint of the arms.

Known rear-view mirror assemblies of this type have the advantage that they can be fitted and removed rapidly from a motor vehicle without need for tools, since there are no fixing screws, and without the need for holes to be made in the vehicle body.

In known mirror assemblies of this type, the clamping spring is a helical tension spring which interconnects intermediate parts of the two arms. In this known arrangement, a constant angle is formed between the two arms when the spring is in its relaxed condition and, therefore, the distance between the two jaws cannot be adjusted when this condition applies.

In order to ensure that the mirror assembly fits firmly onto the car body, the distance between the jaws when the spring is in the relaxed condition must be less than the distance between the gap at the side edge of the bonnet aperture and the edge of the mudguard. The ratio of these two distances, however, must be at an optimal value such that the spring exercises a gripping force on the jaws sufficient to produce a firm fit when the jaws are clamped in engagement with the edges, while the force that a user must exercise to open the arms, in order to engage the jaws with the edges of the vehicle body, is not beyond his ability.

It will be appreciated that a mirror assembly of the aforesaid type must be designed and produced in different types according to the vehicle body with which it is to be used. In fact, the distance between the side edge of the bonnet aperture and the edge of the underlying mudguard varies greatly from the body of one model of vehicle to another. Assuming it were possible to reach edges spaced at different distances with arms of a determined length, it would be necessary, for example, to provide each mirror with a whole range of tension springs of different relaxation length and/or stiffness.

In every case, these known rear-view mirror assemblies are anything but universal, since an assembly designed for one specific type of vehicle body is difficult to adapt to other types. A manufacturer is unable, therefore, to satisfy all potential customers with one model of rear-view mirror. From another point of view, since it is uneconomic for a manufacturer to produce a whole range of different mirror assemblies, recourse is made to a compromise form which can be more or less adapted to a certain range of vehicle body types, when it would be desirable to have a universal mirror assembly which could be adapted to substantially all types of vehicle body.

The provision of a rear-view mirror assembly of the aforesaid type which can be adapted to substantially all types of vehicle body is precisely the object of the present invention.

The present invention achieves this object by providing a rear-view mirror assembly of the aforesaid type, characterised in that the two arms are retained in an articulated condition by releasable retention means, in that each arm has a respective radial wall at its end which articulates with the other arm, at least one of the walls having a circular array of notches concentric with the articulation axis and the other wall having at least one corresponding notch, the radial walls being spaced from each other, and in that the clamping spring comprises a helical torsion spring which is coaxial with the articulation axis, and is interposed between the two radial walls in such a way that a respective, outwardly-facing axially projecting end of the spring engages a notch of the adjacent radial wall, release of the retention means enabling the disengagement of the projecting ends of the spring from the notches and their subsequent engagement in other notches to vary the angle between the arms corresponding to the relaxation condition of the spring.

By virtue of this construction it is possible to vary the distance between the jaws which corresponds to the relaxation position of the spring, according to the distance between the two edges with which the jaws are to engage.

One embodiment of the invention will now be more particularly described, by way of example, with reference to the accompanying drawings, in which:

Figure 1 is a partially cut-way perspective view of part of a motor vehicle fitted with a rear-view mirror assembly according to the present invention;

Figure 2 is a partially-exploded perspective view of the mirror assembly of Figure 1;

Figure 3 is an exploded perspective view of a detail of the mirror assembly of Figure 2, showing the connection of the two arms to the stem of the assembly;

Figure 4 is a partially-sectioned side elevational view taken in the direction of the arrow IV in Figure 2, and

Figure 5 is a partially-sectioned plan view taken along the line V-V in Figure 4.

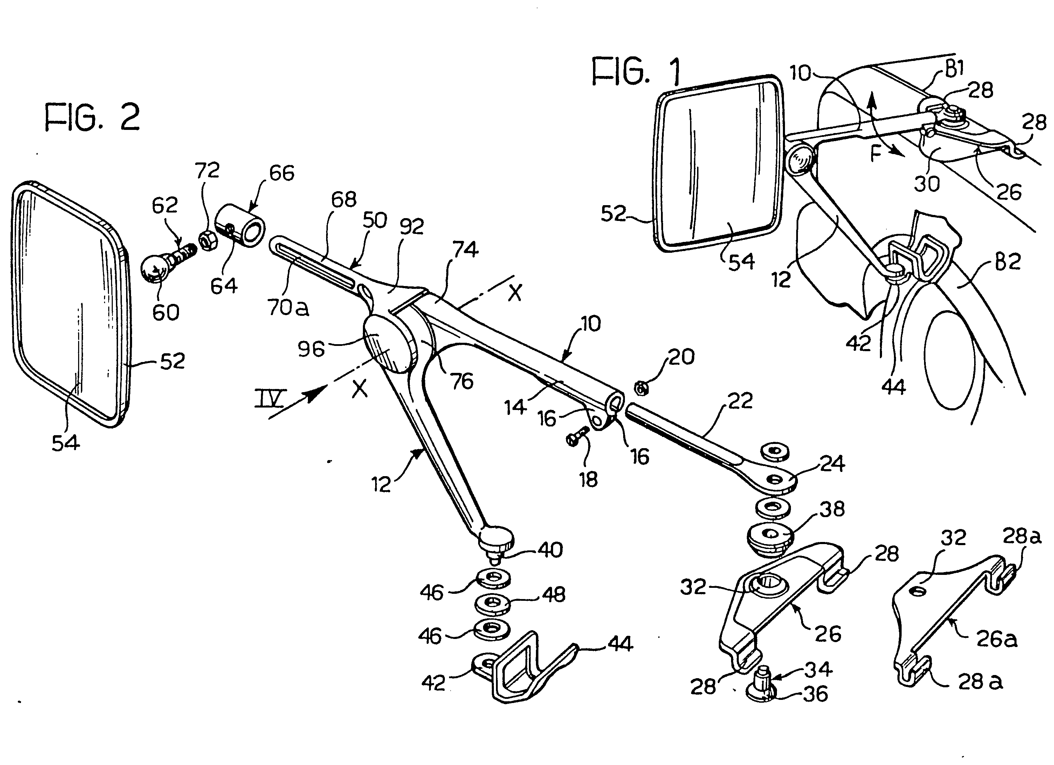

Referring now to the drawings, there is shown an external rear-view mirror assembly for a trailer-towing motor vehicle comprising a pair of caliper-like upper and lower arms 10, 12 which are articulated together about an axis X-X. When the mirror assembly is installed on the motor vehicle, as shown in Figure 1, the axis X-X is substantially parallel to the direction of travel of the vehicle.

The upper arm 10 includes a tubular end portion 14 having a longitudinal lower slit 15 and a pair of terminal lugs 16 into which a transverse clamping screw 18 is inserted to cooperate with a nut 20. A rod-like extension 22 is inserted telescopically into the tubular portion 14 of the arm 10. The extension 22 has an end portion in the form of a flattened lug 24.

The end lug 24 carries an upper jaw 26 made, for example, from profiled sheet metal coated with rubber or plastics. The jaw 26 has a pair of L-shaped flanges 28 which, as shown in Figure 1, engage an edge $B_1$ of the bonnet aperture in the gap between the bonnet itself and the adjacent fixed part of the vehicle body. On its lower part the jaw 26 has a soft cushion 30, preferably in the form of a profiled rubber or plastic skirt, which rests on the fixed part of the car body.

The jaw 26 is suitable for a vehicle body in which the edge of the bonnet aperture is set back from the side of the body, but for a vehicle body in which the edges of the bonnet aperture, and the associated gaps, are located on the sides of the body a jaw of the type shown by 26a in Figure 2 is more suitable. The jaw 26a may, like the jaw 26, also be formed by a profiled sheet metal element coated with rubber or elastomer material, and has a pair of inverted U-shaped tongues 28a which are engageable with the side edges of the bonnet aperture.

Both types of upper jaw 26, 26a have a central dished part 32 drawn into a part-spherical funnel or dimple.

The jaw 26 (or 26a) and the end lug 24 of the extension 22 are interconnected by a rivet 34, the shank of which is inserted through a large hole in the dished central part 32 and the hole of the end lug 24. The head 36 of the rivet 34 is formed as a part-spherical cap which cooperates with the concave face of the dished part 32. A small cup 38 of a material with a high coefficient of friction (such as rubber or plastics) is interposed between the end lug 24 and the dished part 32, and has a concave face in the form of a part-spherical cap which cooperates with the convex face of the dished part 32.

The whole assembly described above is held together firmly by the rivet 34 to form a friction ball-and-socket joint, the function of which will be described below.

Instead of the rivet 34 a screw, which cooperates with a locking nut, may be used. In this case, the two types of jaw 26, 26a may be supplied in one ready-made unit containing the whole rear-view mirror assembly so that the user can make his own selection when fitting the mirror assembly to his vehicle.

A lower jaw 44 is pivoted by a lug 42 to a terminal pin 40 which is formed integrally with the lower arm 12, so as to be substantially vertical when the mirror assembly installed. The lower jaw 44 is formed by a U-shaped sheet metal element which clamps an edge $B_2$ of a mud-guard, as shown in Figure 1.

The lug 42 is connected to the arm 12 by rivetting of the pin 40, with the interpositioning of two metal washers 46 and an intermediate washer 48 of high friction coefficient material, such as rubber or plastics. The washer 48 imparts friction to the articulation of the lower jaw on the arm 12.

The length of the upper arm 10 can be adjusted by sliding the extension 22, which may be fixed in the most suitable position by a clamping screw 18 and nut 20. The ability to adjust the length of the arm 10 enables the upper jaw 26 to be located according to the position of the edge $B_1$, which may be adjacent or remote from the side of the vehicle body, that is, adjacent or remote from the vertical plane containing the edge $B_2$ of the mudguard.

Regulations require that in the event of collision rear-view mirror assemblies should deflect, or should swivel forwardly or rearwardly until they lie flat against the vehicle body, as shown by arrow F in Figure 1. This capacity to deflect is useful since the vehicle may be taken into narrow spaces or passageways without having to remove the rear-view mirrors. This is made possible by the articulation between arms 10 and 12 and the respective jaws 26 (26a) and 44. The spherical articulation between the extension 22 of the upper arm 10 and the upper jaw 26 enables the mirror assembly to deflect even if the axes of the upper and lower articulations do not coincide.

Extension of the upper arm 10 enables the mirror assembly to be fitted to the majority of existing vehicle bodies. In order to increase the adaptability however, the length of the lower arm 12 may also be adjustable, using, for example, a system similar to that adopted for the upper arm. The articulation between lower arm 12 and jaw 44 may also be a friction ball-and-socket joint.

A stem 50, carrying a holder 52 for a reflecting element or mirror proper 54, extends from the articulation joint of the two arms 10, 12. Preferably, the holder 52 is made in a plastics material and comprises a back wall 54 with a central boss 56. The boss 56 is made with a spherical seating 58 for the engagement of a spherical head or cap 60 of a screw 62 which is threaded into a side hole in a bush 66. The bush 66 is slid onto a substantially cylindrical main portion 68 of the stem 50, which has a pair of opposing longitudinal grooves 70a, 70b facing, respectively, to the front and rear of the vehicle, in the installed condition of the assembly.

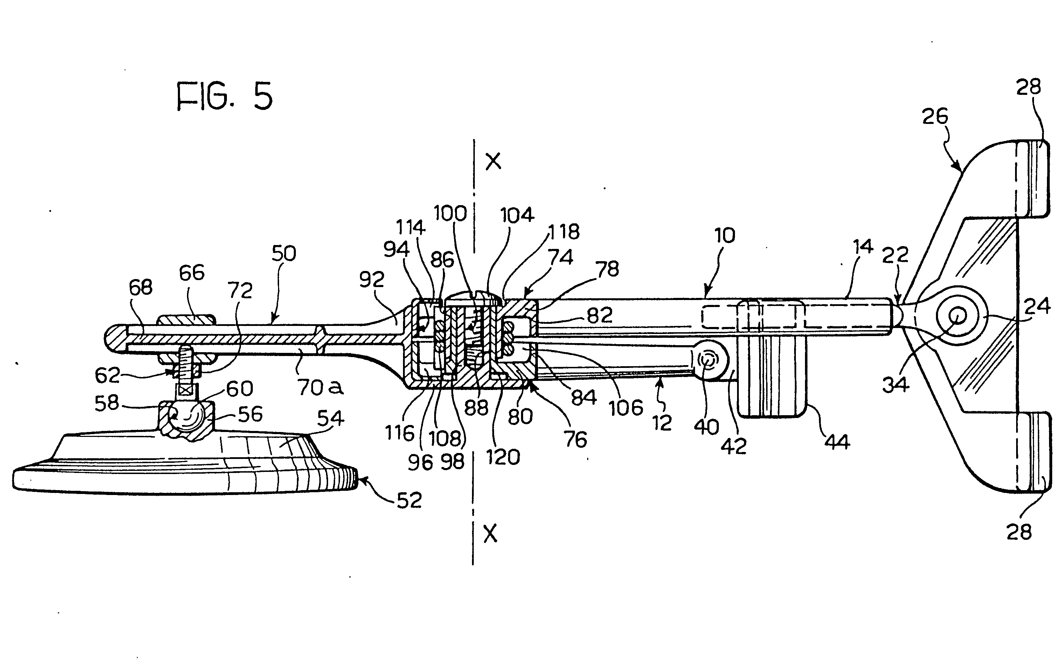

Figures 1, 2 and 5 show a rear-view mirror assembly ready for installation on the left-hand side of a motor vehicle. In this case, the point of the screw 62 engages in the groove 70a and abuts the bottom of the latter. When screw 62 is secured and locked by a locking nut 72, it prevents both the rotation and sliding of the bush 66 relative to the stem 50. The position of the holder 52 along the stem 50 may be adjusted by slackening the screw 62 and sliding the bush 66 along the portion 68 of the stem 50. The ball-and-socket coupling 58, 60 enables the mirror 54 to be positioned correctly.

The mirror assembly may be adapted for mounting on the right-hand side of the motor vehicle simply by slackening the screw 62 and retightening it in engagement with the other groove 70b.

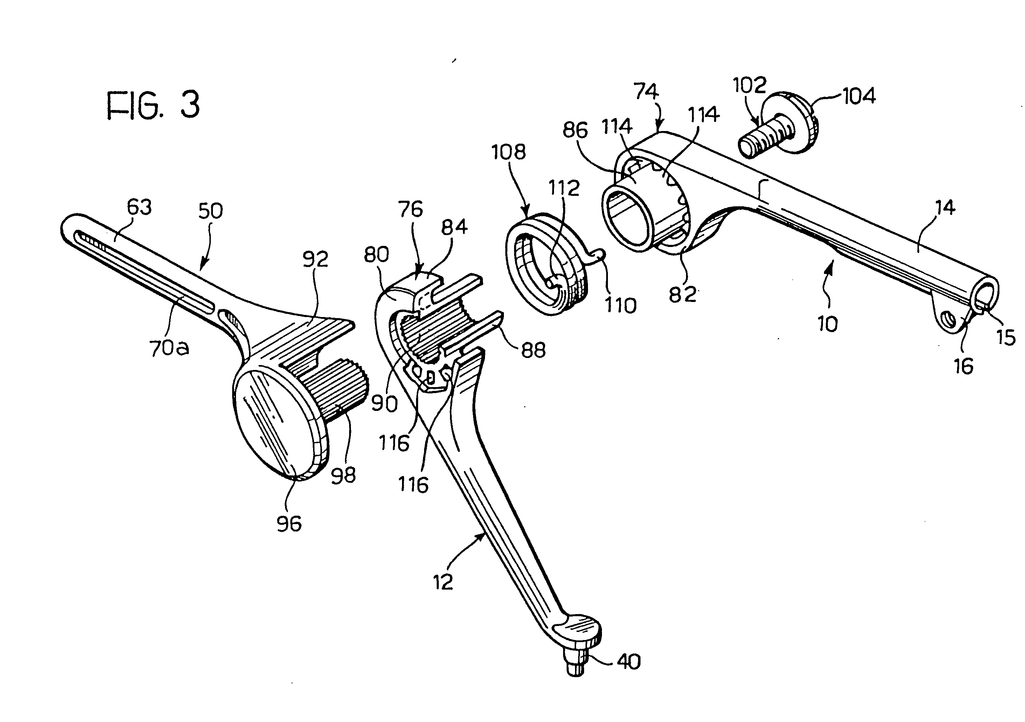

The interconnection of the two arms 10, 12 and the stem 50 will now be described with reference to Figures 3 to 5.

Each arm 10, 12 has a respective enlarged end portion 74, 76 in correspondence with the articulation axis X-X. Each end portion comprises a respective radial wall 78, 80, that is, a wall which is perpendicular to the axis X-X, and a respective annular peripheral skirt 82, 84. The two skirts 82, 84 face each other and their free edges are mutually adjacent.

A larger tubular projection 86 extends from the radial wall 78 towards the other radial wall 80, from which extends a corresponding smaller tubular projection 88. The projection 88 fits precisely into the projection 86, being rotatably coupled therewith. The bore 90 of the smaller projection 88 is splined.

The stem 50 includes an enlarged terminal part 92 having an arcuately curved surface 94 which covers and partially embraces the peripheral skirts 82, 84. The enlarged part 92 includes, on one side, a disc-shaped portion 96 from the centre of which extends a splined projection 98. The latter engages in the splined bore 90, and has a central screw-threaded blind hole 100 which receives a screw 102 coaxial with the articulation axis X-X.

When the screw 102 is screwed fully home in the hole 100, its head 104 is in contact with the radial wall 78 and the disc-shaped portion 96 constitutes another head in contact with the radial wall 80. This arrangement is such that, with screw 102 screwed fully home, there is still sufficient play between the two enlarged portions 74, 76 of the arms 10, 12 to allow their relative rotation about the axis X-X.

The spaced-apart radial walls 78, 80, the peripheral skirts 82, 84 and the larger tubular projection 86 define, between them, an annular chamber 106 which houses a helical torsion spring 108 surrounding the larger projection 86 and having outwardly-facing axially projecting ends 110, 112. Each radial wall 78, 80 has a circular array of notches 114, 116 respectively, concentric with the articulation axis X-X. Preferably, the notches 114, 116 comprise radial grooves which enable the ends 110, 112 to be displaced radially to accommodate the variations in the diameter of the spring 108 following its torsional deformation.

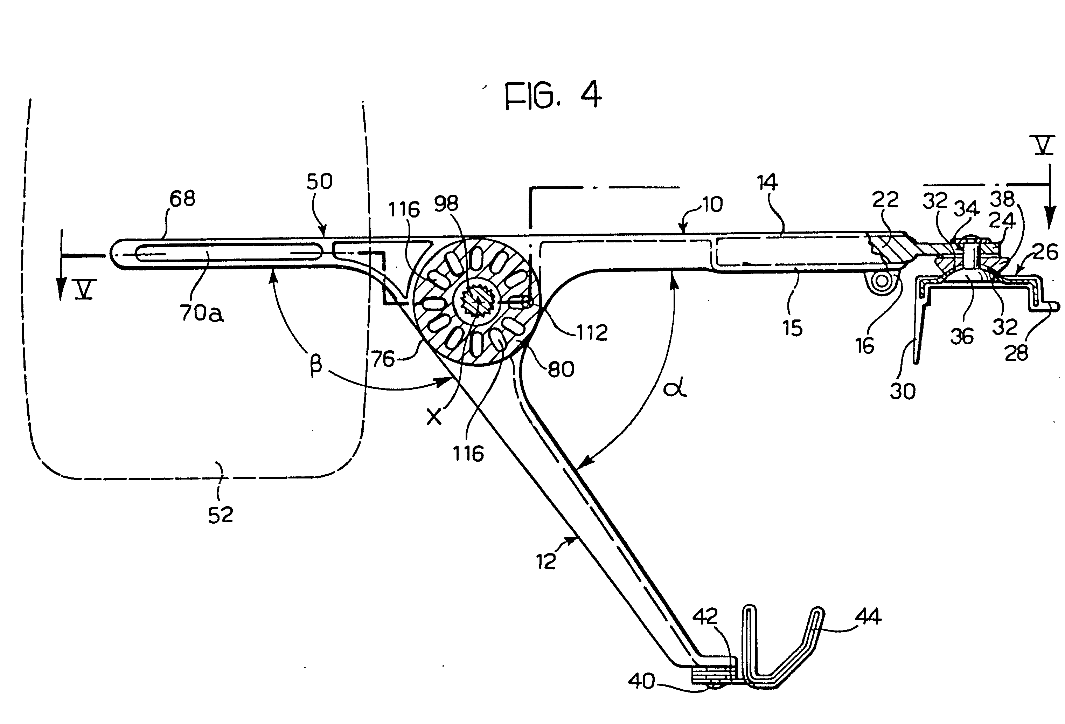

As it will be appreciated, the angle $\alpha$ (Figure 4) between the two arms 10, 12, which corresponds to the relaxation position of spring 108, is determined by the angular position of the notches housing the ends of the spring 108 relative to the axes of the arms 10, 12. The articulation assembly of the two arms 10, 12 can be easily disassembled, even by an inexperienced person, simply by slackening the screw 102. The user can then open the assembly and select those notches 114, 116 into which the ends 110, 112 should be inserted to ensure that the angle $\alpha$ corresponds to a spacing of the jaws 26, 44

which is a little less than the distance between the edges $B_1$, $B_2$ of the vehicle body. In practice the difference between these two distances will be of the order of a few centimetres.

The size of the arm assembly 10, 12 and the thrust rate of the spring 108 is such that, by opening the arms 10, 12 from the rest position, a locking force in the region of 16-18Kg is obtained between jaws 26, 44. As desired, this is sufficient to ensure a firm grip of the mirror assembly on the vehicle body while permitting the arms 10, 12 to be opened manually without undue effort.

In another embodiment, there may be a ring of notches 114, 116 in only one of the radial walls 78,80, while the other radial wall may have a single notch. The presence of two rings of notches, however, facilitates the adjustment of the angle $\alpha$.

The stem 50 may also be released by slackening the screw 102, since the splined projection 98 can be withdrawn from the splined bore 90. In this manner the user can adjust the pitch angle ß (Figure 4) of the stem 50 relative to the lower arm 12, adjust the orientation of the stem 50, and thus, the height of the mirror 54, as required.

If desired, the splined projection 98 may be inserted into the splined bore 90 from the side corresponding to the radial wall 78 rather than the radial wall 80, that is, the position of the releasable retention means formed by the screw 102 and projection 98 may be reversed relative to that illustrated in the Figures. For this purpose, while the radial wall 78 has a central annular seating 118 for the head 104 of the screw 102, the opposite radial wall 80 also has a similar annular seating 120 for the same screw head 104. In this reverse arrangement, the head formed by the disc-shaped portion 96 will be against the radial wall 78.

CLAIMS:

1.  External rear-view mirror assembly for trailer-towing motor vehicles, of the type comprising : a pair of caliper-like arms articulated to each other about an axis which is substantially parallel to the direction of travel of the vehicle when the arms are fitted thereto; respective jaws which are carried at the ends of the arms remote from the articulation joint and are engageable with the body of the motor vehicle in correspondence with a side edge of the bonnet aperture and with an edge of an underlying mudguard, the arms being biassed towards each other by a spring which clamps the jaws, and a mirror-mounting stem which projects from the articulation joint of the arms, characterised in that the two arms (10, 12) are retained in an articulated condition by releasable retention means (102, 98), in that each arm (10, 12) has a respective radial wall (78, 80) at its end (74, 76) which articulates with the other arm, at least one of the walls having a circular array of notches (114, 116) concentric with the articulation axis (X-X) and the other wall having at least one corresponding notch, the radial walls (78, 80) being spaced from each other, and in that the clamping spring comprises a helical torsion spring (108) which is coaxial with the articulation axis (X-X), and is interposed between the radial walls (78, 80) in such a way that a respective outwardly-facing axially projecting end (110, 112) of the spring engages a notch of the adjacent radial wall (78, 80), release of the retention means (98, 102) enabling the disengagement of the projecting ends (110, 112) of the spring (108) from the notches (114, 116) and their subsequent engagement in other notches to vary the angle ($\alpha$) between the arms (10, 12) corresponding to the relaxation condition of the spring (108).

2. Rear-view mirror assembly according to Claim 1, characterised in that each radial wall (78, 80) has a respective circular array of notches (114, 116).

3. Rear-view mirror assembly according to Claim 1 or 2, characterised in that the notches (114, 116) comprise grooves extending radially with respect to the articulation axis.

4. Rear-view mirror assembly according to any of the preceding claims, characterised in that the two arms (10, 12) are articulated to each other by coaxial tubular projections (86, 88) which extend from the radial walls (78, 80) and interengage each other rotatably, the torsion spring (108) and the notches (114, 116) being arranged radially outwardly of the projections (86, 88), and in that the retention means comprise a screw-threaded connection (98, 102) which passes through the inner tubular projection (88) and includes two heads (96, 104) which abut externally the radial walls (78, 80) to prevent the disengagement of the tubular projections (86, 88).

5. Rear-view mirror assembly according to Claim 4, characterised in that the inner tubular projection (88) has a splined bore (90), and in that the stem (50) has, at its end (92) corresponding to the articulation of the two arms (10, 12), a splined lateral projection (98) which engages the splined bore (90), release of the screw-thread connection (98, 102) enabling the stem (50) to be keyed in selected angular positions (ß) relative to the two arms (10, 12) by the disengagement of the splined projection (90) from the splined bore (98) and its re-engagement in another relative angular position.

6. Rear-view mirror assembly according to Claim 5, characterised in that the screw-threaded connection comprises a screw (102) which has a head (104) and engages in a threaded axial hole (100) in the splined projection (98) of the stem (50), and in that the other head is constituted by a portion (96) of the stem (50) which abuts the radial wall (80) of one of the arms.

7. Rear-view mirror assembly according to any of the preceding claims, characterised in that the radial walls (78, 80) of the two arms (10, 12) have respective annular peripheral skirts (82, 84) which face each other and, with the outer tubular projection (86), define an annular chamber (106) which houses the torsion spring (108).

8. Rear-view mirror assembly according to any of the preceding claims, characterised in that at least one of the arms (10) is adjustable in length, and in that at least one of the jaws (26) is connected to the respective arm (10) by a ball-and-socket friction joint (32, 36, 38).

9. Rear-view mirror assembly according to any of the preceding claims, characterised in that the longitudinal position of the holder (52) on the stem (50) is adjustable.

10. Rear-view mirror assembly according to Claim 9, characterised in that the stem (50) has at least one longitudinal groove (70a), and in that the holder is carried by a bush (66) slidable on the stem (50) and having a transverse screw (62) which engages the groove (70a), so as to abut the bottom of the groove and prevent rotation and sliding of the bush on the stem (50).

11. Rear-view mirror assembly according to Claim 9, characterised in that the stem (50) has two opposing longitudinal grooves (70a, 70b) which, in use, face respectively to the front and rear of the motor vehicle, and in that the transverse screw (62) of the bush (66) has a spherical head (60) which engages frictionally in a corresponding central spherical seating (58) of the holder (52).

FIG. 2

FIG. 1

1/4

0029813

FIG. 3

FIG. 4

3/4

0029813

FIG. 5

European Patent Office

**EUROPEAN SEARCH REPORT**

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE − A − 2 000 842 (DOMINION AUTO ACCESSORIES LTD.) * fig. 1, 2 * -- | 1 | B 60 R    1/06 |
| | DE − U − 7 736 285 (DE JONG EN KAASKANT) * fig. 1 * -- | 1 | |
| | DD − A − 126 318 (K.-H. TITTEL et al.) * claim 1; fig. 1 * -- | 1 | TECHNICAL FIELDS SEARCHED (Int. Cl.³) |
| | US − A- 2 898 070 (W.H. DE VAAN) * fig. 1 * -- | 8 | B 60 R    1/00 |
| | US − A − 2 545 777 (H.L. HARDIN) * fig. 2 * -- | 8 | |
| | DE − U1-7 828 002 (SMAT S.N.C. DI LATTANZIO RUGGERO & C.) * fig. 2 * -- | 9 | |
| | DE − U − 7 701 193 (G. HERRMANN) * fig. 1 * -- | 9 | CATEGORY OF CITED DOCUMENTS |
| | US − A − 3 488 026 (F.E. WALLACE et al.) * fig. 2 * -- | 9 | X: particularly relevant A: technological background O: non-written disclosure P: intermediate document T: theory or principle underlying the invention E: conflicting application D: document cited in the application L: citation for other reasons |
| X | The present search report has been drawn up for all claims | | &: member of the same patent family, corresponding document |
| Place of search Berlin | Date of completion of the search 04-02-1981 | Examiner BECKER | |

EPO Form 1503.1   06.78